# FASCICULE DE BREVET EUROPEEN

(11) **EP 3 717 766 B1**
(45) Date de publication et mention de la délivrance du brevet: **02.03.2022**
(21) Numéro de dépôt: 18825759.6
(22) Date de dépôt: 29.11.2018
(51) Int. Cl.: F02K 1/72, F02K 1/80

(54) **INVERSEUR DE POUSSÉE D'UNE NACELLE DE MOTEUR D'AÉRONEF COMPRENANT UN PANNEAU D'ÉVITEMENT D'UN BEC MOBILE DE L'AILE, ET NACELLE ASSOCIÉE**
SCHUBUMKEHRER FÜR EINE FLUGZEUGTRIEBWERKSGONDEL, MIT EINER PLATTE ZUR VERMEIDUNG EINER BEWEGLICHEN LAMELLE DES FLÜGELS UND GONDEL IM ZUSAMMENHANG DAMIT
THRUST REVERSER FOR AN AIRCRAFT ENGINE NACELLE, COMPRISING A PANEL FOR AVOIDING A MOVABLE SLAT OF THE WING, AND NACELLE ASSOCIATED THEREWITH

(30) Priorité: 30.11.2017 FR 1761435
(43) Date de publication de la demande: 07.10.2020
(73) Titulaire: Safran Nacelles, 76700 Gonfreville-l'Orcher (FR)
(72) Inventeur: TABOURET, Alexis, 76700 Gonfreville L'orcher (FR); GIRARDIE, Quentin, 76700 Gonfreville L'orcher (FR); CORFA, Jérôme, 76700 Gonfreville L'orcher (FR); MENIELLE, Matthieu, 76700 Gonfreville L'orcher (FR); PROVOST, Fabrice, 76700 Gonfreville L'orcher (FR)
(74) Mandataire: Germain Maureau
(86) Numéro de dépôt international: PCT/FR2018/053035
(87) Numéro de publication internationale: WO 2019/106298

(56) Documents cités:
- EP-A1- 3 059 432
- WO-A1-2014/052061
- FR-A1- 3 023 324

## Description

La présente invention concerne un inverseur de poussée pour une nacelle d'aéronef recevant un moteur, la nacelle étant équipée d'un panneau d'évitement d'un bec mobile d'une aile d'aéronef, ainsi qu'une nacelle d'aéronef équipée d'un tel inverseur de poussée.

Un aéronef est mu par plusieurs moteurs tels que des turboréacteurs, logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseur de poussée.

Une nacelle présente généralement une structure tubulaire d'axe longitudinal comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur. La structure tubulaire est généralement terminée par une tuyère d'éjection dont la sortie est située en aval du turboréacteur.

La nacelle comporte également typiquement un sommet destiné à recevoir un pylône d'attache permettant le fixer la nacelle et le turboréacteur à une aile de l'aéronef.

On entend ici par le terme « aval » la direction correspondant au sens du flux d'air froid pénétrant dans le turboréacteur. Le terme « amont » désigne la direction opposée.

Les nacelles modernes sont destinées à abriter un turboréacteur double flux apte à générer par l'intermédiaire des pales de la soufflante en rotation un flux d'air chaud (également appelé « flux primaire ») issu de la chambre de combustion du turboréacteur, et un flux d'air froid (« flux secondaire ») qui circule à l'extérieur du turboréacteur à travers un passage annulaire, également appelé « veine ».

Un turboréacteur comporte usuellement une partie dite « amont » comprenant les pales de la soufflante et une partie dite « aval » abritant le générateur de gaz.

La section aval de la nacelle pour un tel moteur présente généralement une structure externe, dite Outer Fixed Structure (OFS) et une structure interne concentrique, dite Inner Fixed Structure (IFS), entourant la structure du moteur proprement dite à l'aval de la soufflante. Les structures interne et externe définissent une veine destinée à canaliser le flux d'air froid qui circule à l'extérieur du moteur. La structure externe comporte dans certains cas un inverseur de poussée comprenant un ou plusieurs capots coulissants suivant l'axe longitudinal de la nacelle entre une position permettant l'échappement d'un flux d'air inversé et une position empêchant un tel échappement.

Un type d'inverseur de poussée connu, présenté notamment par le document FR 2758161 A1, comporte des capots mobiles arrière coulissant axialement vers l'aval sous l'effet de vérins, en déployant des volets dans la veine annulaire afin de fermer au moins partiellement cette veine. Ces volets renvoient le flux d'air froid radialement vers l'extérieur en passant par des grilles découvertes lors du coulissement, comprenant des aubes qui dirigent ce flux vers l'avant.

Un tel inverseur de poussée permet, grâce au flux d'air inversé, de réduire la distance de freinage de l'aéronef à l'atterrissage.

Par ailleurs, les ailes de certains aéronefs comportent des becs mobiles de bord d'attaque qui se déploient vers l'avant et vers le bas afin de modifier les caractéristiques aérodynamiques de ces ailes, en particulier lors du vol à faible vitesse pour l'atterrissage.

Dans ce cas, en particulier pour les nacelles de grand diamètre disposées à proximité des ailes afin de conserver une garde au sol suffisante en dessous, on peut obtenir une interférence entre le bec mobile de bord d'attaque déployé, et les capots mobiles quand ils reculent pour mettre en œuvre l'inverseur de poussée.

Afin d'éviter cette interférence, un type de nacelle connu comporte de chaque côté du pylône vertical soutenant la nacelle, dans la zone proche du bord d'attaque de l'aile se trouvant sur le dessus de cette nacelle, un petit capot fixe aussi appelé capot ou panneau d'évitement qui complète le capot mobile pour fermer l'entourage annulaire complet de la nacelle. Dans ce cas le panneau d'évitement fixe ne reculant pas lors de l'ouverture du capot, on élimine le risque d'interférence avec le bec mobile de bord d'attaque.

Dans une telle configuration, lorsque le panneau d'évitement est relié de façon rigide à la structure fixe, on observe que, lors de la déformation de la structure mobile de l'inverseur de poussée, cela laisse apparaître des défauts de surface avec le panneau d'évitement. Ces défauts de surfaces impliquent des jeux de fonctionnement couramment appelés « step and gaps » en termes anglophones.

Dans une autre configuration connue, le panneau d'évitement peut être fixé sur la structure mobile. Il est prévu dans ce cas un dispositif de coulissement permettant de compenser le mouvement de ce dernier. Une telle configuration implique nécessairement, outre les jeux de fonctionnement maîtrisés dans ce cas avec la structure mobile, des jeux de fonctionnement avec la structure fixe, ce qui n'arrive pas quand le panneau d'évitement est fixé sur celle-ci.

Dans le cadre des panneaux d'évitement, il est d'usage, soit de ne pas gérer ces jeux de fonctionnement entre panneau d'évitement et structure mobile, soit de déformer le panneau d'évitement. Le document EP3059432 montre un panneau d'évitement selon l'art antérieur.

Toutefois ces solutions présentent chacune des inconvénients.

D'une part, ne pas gérer les jeux de fonctionnement génèrent des contraintes aérodynamiques, impactant en particulier sur les performances, et des contraintes cinématiques (problème de réengagement par exemple).

D'autre part, déformer le panneau d'évitement en ayant un système hyperstatique où le panneau d'évitement serait encastré sur la structure fixe mais également aussi à l'avant (dans le cas où la découpe du panneau d'évitement s'étendrait jusqu'au cadre avant) peut fonctionner.

Toutefois, une telle solution ne s'applique pas si la découpe du panneau d'évitement ne s'étend pas jusqu'au cadre avant, ce qui est le cas lorsqu'il est agencé pour laisser passer du flux reverse par exemple pour optimiser la capacité de freinage de l'aéronef par l'inverseur de poussée en position jet inversé ou jet indirect. En d'autres termes, ces solutions par déformation ne fonctionnent que si le bord d'attaque du panneau correspond au cadre avant. Dans le cas contraire, le panneau d'évitement a besoin d'être rigide pour ne pas s'arracher, ce qui est antagoniste de la solution par déformation.

Par ailleurs, il est certes déjà connu d'autres éléments de la nacelle que les panneaux d'évitement qui génèrent également des défauts de surface similaires aux interfaces entre différentes pièces de la nacelle. C'est le cas par exemple de certaines trappes équipant la nacelle.

Dans ce type de configuration connu, le problème de jeux de fonctionnement est résolu par une liaison pivot d'un côté et par un appui de l'autre, contraint par un verrou pour verrouiller la fermeture de la trappe. Cette liaison appui et contrainte n'est pas compatible avec la cinématique du capot mobile : celui-ci doit pouvoir reculer par rapport à la structure fixe, ce qui fait qu'une telle solution n'est pas transposable à un panneau d'évitement dont la cinématique et la mobilité est de nature très différente.

Une telle solution n'est pas non plus compatible avec des forts déplacements axiaux (de l'ordre généralement de 500mm) entre les structures fixe et mobile.

Le but de l'invention est de résoudre tout ou partie de ces inconvénients, notamment en proposant un inverseur de poussée comprenant un panneau d'évitement dans lequel les jeux de fonctionnement sont réduits, voire supprimés.

À cet effet, l'invention concerne un inverseur de poussée pour une nacelle de moteur d'aéronef, l'inverseur de poussée comprenant un capot mobile reculant d'une position fermée où la poussée n'est pas inversée à une position ouverte pour découvrir des grilles inversant le sens du flux d'air froid qui est dévié de la veine annulaire d'air secondaire, le capot mobile comportant une partie radialement externe destinée à venir à proximité d'un bord d'attaque d'une aile d'un aéronef, le capot mobile comportant sur la partie radialement externe au moins un panneau d'évitement destiné à éviter une interférence avec un bec mobile du bord d'attaque de l'aile de l'aéronef, l'inverseur de poussée étant remarquable en ce que le panneau d'évitement est monté en pivotement par rapport à une structure fixe de l'inverseur de poussée, l'inverseur de poussée comprenant en outre au moins un moyen d'emmagasinement d'énergie configuré de sorte que le panneau d'évitement est contraint en appui contre le capot mobile, au moins lorsque l'inverseur de poussée est en position fermée.

Grâce à ces caractéristiques, en introduisant un degré de liberté en pivotement entre le panneau d'évitement et la structure fixe, cela permet au panneau d'évitement de suivre les déformations de la structure mobile en vol, à savoir en position fermée, de jet direct, de l'inverseur de poussée.

Le fait de suivre ces déformations est rendu possible par une liaison cinématique autorisant la mobilité relative entre le panneau d'évitement et le capot mobile , tout en compensant des jeux qui seraient synonymes d'usure.

Selon une configuration technique particulière le panneau d'évitement est fixe en translation par rapport à la structure fixe.

Selon une caractéristique technique, le panneau d'évitement est fixé à la structure fixe par une liaison pivot, assurée par des charnières alignées longitudinalement par rapport à l'inverseur de poussée. Dans des configurations alternatives et/ou complémentaires, d'autres moyens de pivotement peuvent être utilisés tels que des lames capables de se déformer élastiquement ou queue d'arronde, par exemple.

Avantageusement, dans la position fermée, le panneau d'évitement est contraint en contact et en appui contre le capot mobile au niveau de zones d'appuis localisées sur une périphérie dudit panneau d'évitement.

Cette configuration est particulièrement avantageuse du fait que cela permet de minimiser les zones de recouvrement entre le capot mobile et le panneau d'évitement. Les zones d'appuis étant localisées au niveaux d'une partie de la périphérie au moins, cette zone de recouvrement est minimsée assurant aussi un gain de poids.

De préférences, ces zones d'appuis sont discontinues sur le pourtour du panneau d'évitement et présente au moins une zonne d'appui amont et une zone d'appui aval.

Avantageusement, la zone d'appui amont présent un bord présentant une pente par rapport à l'axe longitudinale de sorte à ce que, lorsque le capot mobile est déplacé en aval vers la position ouverte, le capot mobile vient par-dessus radialement le panneau d'évitement.

Avantageusement encore, dans la position ouverte, le panneau d'évitement est contraint en contact et en appui contre le capot mobile au niveau d'une zone localisée sur une surface extérieure du panneau d'évitement.

De préférence dans ce cas, la zone d'appui est formé par une bande de contact s'étendant longitudinalement. De préférence encore, cette zone d'appui est décallée angulairement par rapport à la structure fixe.

Dans une configuration technique particulière, les zones d'appuis présentent une bande de contact agencée pour garantir l'intégrité structurelle et aérodynamique du panneau d'évitement et du capot mobile.

Dans une configuration avantageuse, le moyen d'emmagasinement d'énergie est un moyen de rappel élastique, par exemple un ressort.

Avantageusement encore, le moyen d'emmagasinement d'énergie est disposé entre la structure fixe et le panneau d'évitement de sorte à contraindre ledit panneau d'évitement en appui contre le capot mobile.

Selon une caractéristique technique particulière, le panneau d'évitement est contraint en appui contre le capot mobile, en position fermée et en position ouverte. Dans cette configuration, lorsque l'inverseur de poussée se déplace de sa position fermée en jet direct à sa position ouverte en jet inversé, le capot mobile se déplace en translation vers l'aval par-dessus radialement le capot dévitement.

Le panneau d'évitement est dimensionné, en particulier sa dimension longitudinale, de sorte à ce que la contrainte qu'il assure contre le capot mobile ne soit à aucun moment de la cinématique relâchée, cela en fonction de la course du capot mobile 31.

Selon un autre aspect, l'invention concerne également une nacelle pour moteur d'aéronef double flux comprenant une entrée d'air en amont du moteur, une section médiane destinée à entourer une soufflante du moteur, une section aval délimitant une veine annulaire adaptée pour faire circuler le flux d'air et abritant un inverseur de poussée, l'inverseurde poussée comprenant au moins un capot mobile, mobile entre une position de jet direct, dans laquelle il assure la continuité aérodynamique de la nacelle et une position de jet indirect dans laquelle il ouvre un passage dans la nacelle en ouvrant des grilles disposées autour de cette veine qui reçoivent le flux d'air froid pour le renvoyer vers l'extérieur et vers l'avant, la nacelle étant remarquable en ce que l'inverseur de poussée comprend tout ou partie des caractéristiques précitées.

D'autres caractéristiques et avantages de l'invention ressortiront à la lecture de la description qui suit, donnée uniquement à titre d'exemple, en référence aux figures annexées, qui illustrent :
- figure 1, une coupe schématique partielle d'un mode de réalisation d'une nacelle ;
- figure 2, une vue extérieure d'un inverseur de poussée selon un mode de réalisation représenté dans la position fermée ;
- figure 3, une vue schématique en perspective extérieure sur le dessus d'une nacelle selon un mode de réalisation ;
- figure 4, une vue en coupe axiale d'un inverseur de poussée selon un mode de réalisation présenté dans la position fermée ;
- figure 5, une vue d'un panneau d'évitement selon un mode de réalisation sur un inverseur de poussée, en position fermée ;
- figure 6, un schéma de principe des liaisons entre un panneau d'évitement, une structure fixe et un capot mobile d'un inverseur de poussée selon un mode de réalisation de l'invention ;
- figure 7, une vue détaillée, en coupe, d'un panneau d'évitement selon un mode de réalisation de l'invention ;
- figure 8, une vue de dessus d'un panneau d'évitement dans un position fermée de l'inverseur de poussée selon ce mode de réalisation de l'invention,
- figure 9, une vue de dessus d'un panneau d'évitement selon un mode de réalisation de l'invention.

Sur l'ensemble de ces figures, des références identiques ou analogues désignent des organes ou ensembles d'organes identiques ou analogues.

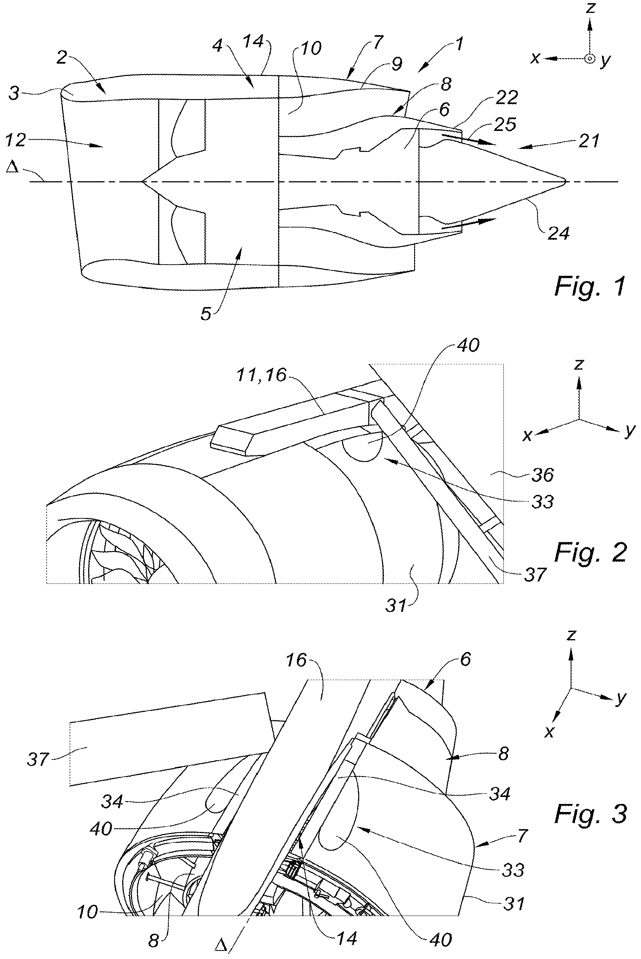

Comme représenté sur la figure 1, une nacelle 1 selon l'invention présente une forme sensiblement tubulaire selon un axe longitudinal Δ (direction parallèle à X). La nacelle 1 comprend une section amont 2 avec une lèvre d'entrée d'air 3, une section médiane 4 entourant une soufflante 5 d'un moteur 6 tel qu'un turboréacteur double flux et une section aval 7.

La section aval 7 comprend une structure interne 8 (encore appelée « inner fixed structure » ou « IFS ») entourant la partie amont du turboréacteur 6, une structure externe (encore appelée « outer fixed structure » ou « OFS ») 9 et un capot mobile comportant des moyens d'inversion de poussée. La structure interne ou IFS 8 ainsi que la structure externe ou OFS 9 sont fixes par rapport au capot mobile.

L'IFS 8 et l'OFS 9 délimite une veine 10 permettant le passage d'un flux d'air 12 pénétrant la nacelle 1 au niveau de la lèvre d'entrée d'air 3.

La nacelle 1 comporte un sommet 14 destiné à recevoir un pylône 16 d'attache permettant de fixer ladite nacelle 1 à une aile de l'aéronef. Pour ce faire, ledit sommet 14 comporte des moyens pour fixer ledit pylône 16.

La nacelle de turboréacteur est en particulier suspendue au pylône 16, par le biais d'une poutre 11 au niveau de ce sommet 14.

La nacelle 1 se termine par une tuyère d'éjection 21 comprenant un module externe 22 et un module interne 24. Les modules interne 24 et externe 22 définissent un canal d'écoulement de flux d'air primaire 25, dit chaud, sortant du turboréacteur 6.

Les figures 2, 3 et 4 présentent une nacelle 1 de turboréacteur suspendue à un pylône 16, par le biais d'une poutre 11, disposé dans un plan vertical, la nacelle comportant l'entrée d'air avant 3, puis en partant vers l'aval, des capots fixes entourant la section médiane 4, et deux capots mobiles 31 formant chacun sensiblement un demi-cercle, qui rejoignent en partie supérieure la poutre 11.

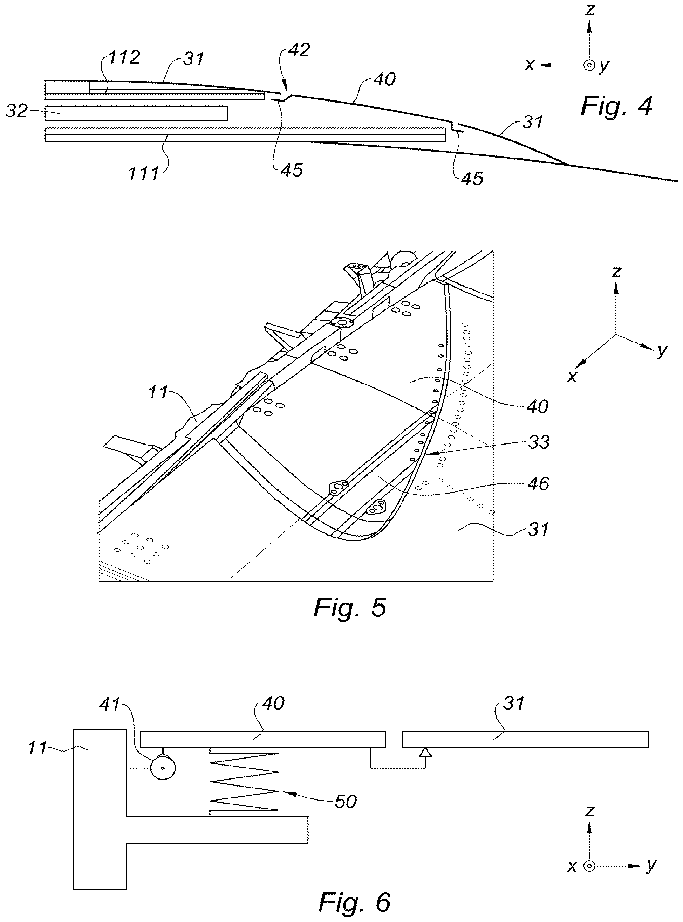

Les capots mobiles 31 sont guidés par des rails longitudinaux (voir la figure 4) qui encadrent radialement des grilles 32 installées autour de la nacelle 1, comportant des aubes de redressement du flux d'air froid 12 vers l'amont. Des rails primaires 111 sont disposés radialement vers l'intérieur des grilles 32, et des rails secondaires 112 vers l'extérieur.

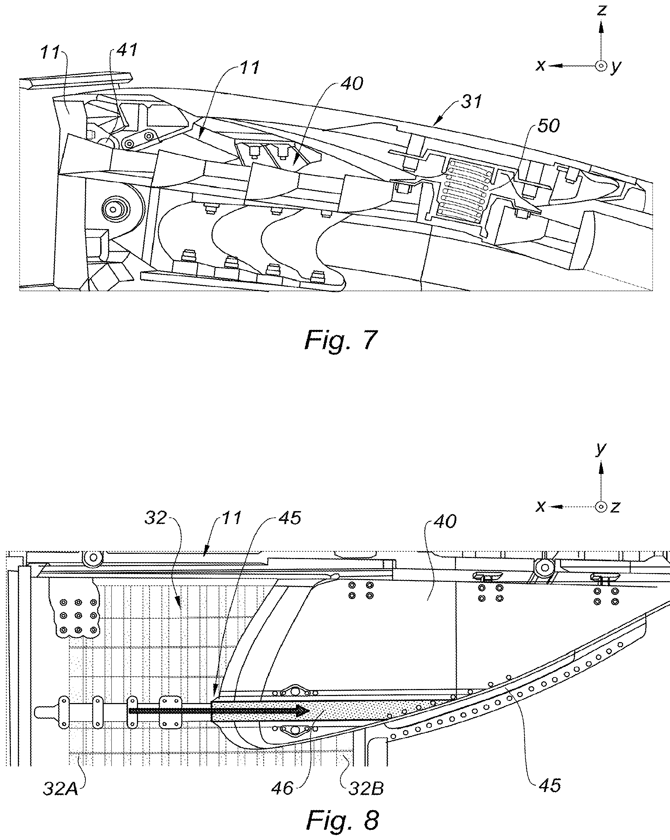

Les grilles 32 sont supportées du côté amont par un cadre avant 32A fixe et du côté aval par un cadre arrière 32B fixe (voir figure 8), qui forment chacun une structure porteuse circulaire autour de la nacelle 1. On notera que sur la figure 8, pour des raisons de clarté le capot mobile 31 n'est pas illustré.

Comme représenté sur la figure 3, l'OFS, et en particulier l'inverseur de poussée 30, comprend au moins un capot mobile 31, mobile suivant l'axe longitudinal Δ de sorte à permettre l'évacuation du flux d'air 12 circulant dans la veine 10 lors d'une phase d'inversion de poussée.

Plus précisément, le ou les capots mobiles 31 arrière (ici deux) coulissent axialement vers l'aval sous l'effet de vérins, en déployant des volets (non illustrés) dans la veine 10 annulaire dans une position ouverte de l'inverseur de poussée afin de fermer au moins partiellement cette veine 10. Ces volets renvoient le flux d'air 12 froid radialement vers l'extérieur en passant par des grilles 32 découvertes lors du coulissement, comprenant des aubes qui dirigent ce flux vers l'avant.

L'aile 36 de l'aéronef sur laquelle est attachée la nacelle 1 comporte typiquement des éléments pouvant provoquer des interférences avec le capot mobile 31, et plus précisément avec une partie radialement externe 33 dudit capot mobile 31 localisée à proximité d'un bord d'attaque de l'aile. A titre d'exemple, on peut citer des becquets 37 facilitant l'atterrissage et le freinage de l'aéronef (voir les figures 2 et 3).

Le capot mobile 31 comporte sur la partie radialement externe 33 au moins un panneau d'évitement 40, cedit panneau d'évitement 40 étant destiné à éviter une interférence avec un bec mobile du bord d'attaque de l'aile de l'aéronef. Pour assurer cette fonction, la cinématique du panneau d'évitement 40 lors de l'inversion de poussée est rendue différente de celle du capot mobile 31.

Selon l'invention, le panneau d'évitement 40 est monté en pivotement par rapport à une structure fixe de l'inverseur de poussée 30 et fixe longitudinalement en translation par rapport à ladite structure fixe. En particulier dans ce mode de réalisation, le panneau d'évitement 40 est fixé sur la poutre 11 de la nacelle 1 et monté en pivotement rapport à ladite poutre 11. En alternative ou en complément, le panneau d'évitement 40 peut être fixé à l'IFS 8. La poutre 11 peut également être considérée dans certain cas, suivant la configuration de la nacelle, comme un élément de l'IFS 8..

Plus précisément, le panneau d'évitement 40 est fixé à la structure fixe par une liaison pivot 41, assurée par des charnières alignées longitudinalement par rapport à l'inverseur de poussée 30. Dans ce cas, des chapes de fixations prévues à cette effet sont formées sur la poutre 11, de préférence monobloc avec ladite poutre 11. Dans des configurations alternatives, les charnières peuvent être rapportées sur la poutre 11, ou une partie de ces charnières. Plus généralement, les moyens de liaison en pivotement peuvent être rapportés en tout ou partie sur la poutre 11, la fonction de pivotement pouvant être réalisée de différentes manières (élément déformable, queue d'aronde, pièce d'articulation élastique communément appelée « silent block », etc...).

Chaque capot mobile 31 comporte dans sa partie supérieure, à côté de la poutre 11, une découpe située entre ses extrémités amont et aval, qui reçoit un panneau d'évitement 40 refermant complètement cette ouverture quand l'inverseur de poussée 30 est dans sa position fermée.

Un carénage 34 longitudinal peut être intercalé entre la poutre 11 et le capot mobile 31 ainsi que le panneau d'évitement 40. Ce carénage 34 est solidaire de la poutre 11 et/ou de l'IFS 8 et a pour fonction de cacher certains éléments de fixation telle que les charnières qui permettent d'attacher ladite poutre 11 au pylône 16.

Pour une nacelle 1 donnée, comme c'est le cas sur ces figures, un panneau d'évitement 40 peut être disposé de chaque côté de la poutre 11.

Dans certains cas, en fonction de la configuration de la nacelle par rapport notamment au bec mobile de l'aéronef associé, un panneau d'évitement 40 peut être disposé seulement sur un des côtés de la poutre 11. En effet, on peut noter par exemple que les becquets 37 ne sont pas toujours présents de chaque côté de la nacelle 1.

De manière générale, le panneau d'évitement 40 est disposé de sorte à être à proximité ou sous le becquet de l'aile lorsque la nacelle est montée sur l'aile.

Dans le cas où un seul panneau d'évitement 40 équipe la nacelle, la configuration est que généralement, pour une aile gauche lorsque l'on regarde l'aéronef de face, le panneau d'évitement 40 est monté à gauche du sommet 14 de la nacelle lorsque l'on regarde cette dernière de face, à savoir face à l'entrée d'air, et pour une aile droite, lorsque l'on regarde l'aéronef de face, le panneau d'évitement 40 est monté à droite du sommet 14 de la nacelle de l'invention lorsque l'on regarde cette dernière 1 de face, à savoir face à l'entrée d'air.

Dans cette position fermée, le panneau d'évitement 40 présente une surface extérieure agencée pour être léchée par le flux extérieur à la nacelle 1 qui est située dans la continuité de la surface extérieure du capot mobile 31 adjacent.

Le panneau d'évitement 40 présente une forme sensiblement d'une aile oblongue. En particulier ici, le panneau d'évitement présente une extrémité amont sensiblement arrondie et une extrémité aval qui s'affine vers l'aval. Cette forme est avantageuse en ce qu'elle constitue une découpe minimale afin d'éviter l'intersection de la zone à risque avec le bord de l'aile (qui forme un plan horizontal sur le dessous du bec) tout en garantissant la ligne aérodynamique externe (cylindroconique). Il est possible pour des raisons diverses d'étendre ses dimensions mais ceci serait toutefois au détriment de la performance en inversion de poussée car le panneau d'évitement 31 obture localement la section de sortie du flux inversé.

L'inverseur de poussée 30 comprend en outre au moins un moyen d'emmagasinement d'énergie 50 configuré de sorte que le panneau d'évitement 40 est contraint en appui radialement contre le capot mobile 31.

Le moyen d'emmagasinement 50 d'énergie comprend de préférence un moyen de rappel élastique tel qu'un ressort, comme illustré sur les figures 6 et 7. Le ressort 50 est disposé entre la structure fixe et le panneau d'évitement 40 de sorte à assurer cet appui sous contrainte élastique dudit panneau d'évitement 40 contre le capot mobile 31.

Cet appui sous contrainte du panneau d'évitement 40 contre le capot mobile, en particulier radialement sous ledit capot mobile, est appliqué et maintenu quelque que soit la position du capot mobile 31, en position fermée, en position ouverte ou dans une position intermédiaire à ces deux positions.

En effet, dans la position fermée, le panneau d'évitement 40 est contraint en contact et en appui contre le capot mobile 31 au niveau de zones d'appuis 45 localisées sur la périphérie dudit panneau d'évitement 40 (voir la figure 8).

Cette configuration est avantageuse du fait que cela permet un bon compromis entre minimiser les zones de recouvrement entre le capot mobile et le panneau d'évitement tout en offrant une bonne gestion des jeux de fonctionnement couramment appelés « step and gaps » en termes anglophones, ceci, tout autour du panneau, ou tout au moins sur les zones où c'est cinématiquement possible. Ces zones d'appuis sont, dans ce mode de réalisation, discontinues sur le pourtour du panneau d'évitement et présente au moins une zonne d'appui amont et une zone d'appui aval.

En particulier, le panneau d'évitement 31 comporte en position fermée deux zones d'appui 45, l'une située sur un bord amont et l'autre sur un bord aval. Ces surfaces d'appuis 45 sont formées chacune par un prolongement localisé du panneau d'évitement 40, ces prolongements présentant un décrochement dirigé radialement vers l'intérieur de la nacelle et d'une portion d'appui venant sous le capot mobile 31 en position fermée. Le décrochement permet à la portion d'appui d'être solidaire du panneau d'évitement 40 en étant situé radialement sous le capot mobile dans la position fermée tout en présentant une surface extérieure du panneau d'évitement 40 affleurante avec la surface extérieure du capot mobile 31 afin d'assurer une continuité aérodynamique de la nacelle 1.

Dans la configuration illustrée sur les figures, la zone d'appui 45 aval s'étend à la périphérie du panneau d'évitement sur une étendue, ou largueur, plus importante que celle de la zone d'appui amont 45. En effet, cette zone d'appui aval 45 est étendue au maximum de ce que permettent l'encombrement et la cinématique afin de mieux gérer les jeux de fonctionnement. Cette zone d'appui aval 45 s'entend de préférence sur au moins 50% de la largeur du panneau d'évitement 40, et/ou sur au moins 50% de la longueur de son bord amont.

Lorsque l'inverseur de poussée 30 passe de la position fermée à la position ouverte, le capot mobile 31 vient en butée contre un bord amont 42 du panneau d'évitement 40 qui présente une pente de guidage agencée pour guider le capot mobile 31 radialement au-dessus du panneau d'évitement lorsque ledit capot mobile recule vers la position ouverte. En particulier ici, cette pente de guidage est formée par le décrochement de la zone d'appui 45.

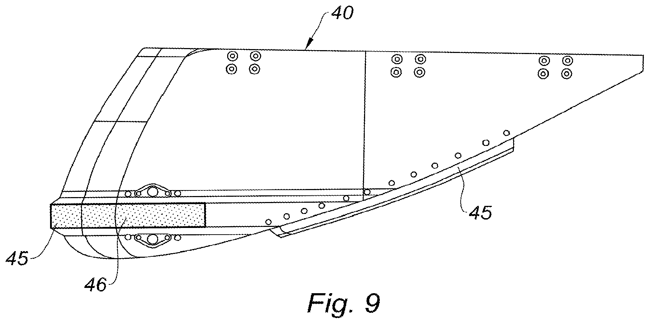

Par ailleurs, durant l'ouverture de l'inverseur de poussée, dans une position intermédiaire jusque dans la position ouverte du capot mobile 31, le panneau d'évitement 40 est contraint en contact et en appui contre le capot mobile 31 au niveau d'une zone d'appuis 46 localisée sur une surface extérieure du panneau d'évitement 40. Durant ce mouvement le capot mobile 31 glisse sur cette zone d'appui 46 qui présente la forme d'une bande de frottement (voir les figures 7 et 8). Par ailleurs, comme cela est particulièrement visible sur les figures 8 et 9, la zone d'appui 46 localisée sur la surface extérieure du panneau d'évitement 40 est située sensiblement dans le prolongement, de préférence même continu, de la zone d'appui 45 amont, située sur le bord amont dudit panneau d'évitement.

Cette bande de frottement 46 s'étend longitudinalement du bord amont au bord aval du panneau d'évitement 40, comme cela est visible sur la figure 8. En fonction de la course prédéterminée du capot mobile 31, la bande de frottement 46 peut s'étendre longitudinalement à partir du bord amont sans toutefois atteindre le bord aval : cette zone d'appui 46 s'étend donc dans ce cas longitudinalement sur une partie seulement du panneau d'évitement à partir de son bord amont, comme cela est illustré sur la figure 9. En outre, cette zone d'appui est décallée angulairement par rapport à la structure fixe. Le décalage angulaire est particulièrement avantageux pour gérer l'arrêt du degré de liberté en rotation, à savoir les pivots, le plus loin possible de l'axe de rotation. Dans une configuration également favorable, cette zone d'appui 46 est située en face du (ou aligné avec le) moyen de rappel élastique 50, à savoir le ressort, (le panneau d'évitement 40 étant situé entre la zone d'appui 46 et le ressort). Cette configuration permet en effet de diminuer les contraintes de flexion du panneau d'évitement 40. En d'autres termes, le moyen de rappel élastique 50 est situé radialement sensiblement au droit de la zone d'appui 46.

La bande de frottement 46 étant léchée par le flux d'air extérieur à la nacelle en phase de vol, cette zone d'appui 46 est configurée avantageusement de sorte à être sensiblement affeurante avec la surface extérieure du panneau d'évitement 40, c'est-à-dire qu'elle ne désaffleure pas ou peu de ladite surface extérieure du panneau d'évitement 40.

Les zones d'appuis 45, 46 présentent ainsi chacune une bande de contact ou bande de frottement agencée pour garantir l'intégrité structurelle et aérodynamique du panneau d'évitement 40 et du capot mobile 31. Des matériaux adaptés aux frottements pourront être utilisés à cet effet tels qu'un matériau polymère, par exemple du polytétrafluoroéthylène (PTFE). En cas d'usure il est ainsi possible de changer seulement la bande de frottement et pas la pièce de la nacelle 1.

Dans le cas décrit ci-avant où la zone de d'appui 46 localisée sur la surface extérieure du panneau d'évitement 40 est située sensiblement dans le prolongement continue de la zone d'appui 45 amont, située sur le bord amont dudit panneau d'évitement, la bande de frottement de la zone d'appui amont 45 et de la zone d'appui 46 localisée sur la surface extérieure du panneau d'évitement 40 est une seule et même bande qui s'étend continument sur ces deux zones d'appuis 45, 46.

Un tel panneau d'évitement 40 permet d'éviter le risque de contact entre un bec mobile 31 de l'aile 36 et le capot mobile 31 de l'inverseur de poussée dans la mesure où de chaque côté de la poutre 11, le panneau d'évitement 10 est maintenu longitudinalement dans sa position d'origine en ouvrant la découpe du capot mobile 31, la partie du bec mobile 37 la plus proche de la nacelle 1 venant à proximité de cette découpe avec une distance de sécurité prédéterminée, ceci notamment lorsque les becs mobiles 37 des bords d'attaque des ailes 36 sont entièrement déployés pour venir vers l'avant et vers le bas, afin d'améliorer la sustentation des ailes aux basses vitesses lors de l'atterrissage. On évite ainsi un risque de contact entre ces deux éléments, qui pourrait causer une usure et une défaillance.

On notera que la découpe du capot mobile 31 étant restreinte suivant l'espace nécessaire pour la proximité du bec mobile 36, on obtient une découpe de dimension réduite qui permet de ne pas limiter les performances de l'inverseur 30 dans cette position.

Par ailleurs dans la position de vol normal, le panneau d'évitement 40 venant dans la continuité de la surface du capot mobile 31, on n'a pas de perte aérodynamique.

Le figure 6 illustre un schéma de principe des liaisons entre le panneau d'évitement 40, une structure fixe formée par la poutre 11 et un capot mobile 31 d'un inverseur de poussée selon un mode de réalisation.

La liaison du panneau d'évitement 40 avec la structure fixe, ici la poutre 11, est un pivot 41, formé ici par une ligne charnière. Alternativement ou de manière complémentaire, cette liaison peut être réalisée par des lames capables de se déformer élastiquement et/ou une queue d'aronde.

La liaison avec la structure mobile formée par le capot mobile 31 est formée d'appuis plans localisés au niveau des bandes de frottement 45, 46. Comme décrit ci-avant, l'une 45 sert en vol, l'autre 46 sert à maintenir une position du panneau d'évitement 40 compatible du déploiement/escamotage du capot mobile 31 lors des opérations de déploiement/escamotage.

D'autres liaisons plus libres telles que des liaisons linéaire, annulaire, ponctuelle sont toutefois possibles.

On notera que la présence des deux zones d'appui 45, 46 est particulièrement avantageuse au vu de la grande mobilité relative des panneaux d'évitement 40 qui est suffisante pour désengager des liaisons dites « simples ». Ces zones d'appui 45, 46, notamment sous forme de bandes de frottement, facilitent la compatibilité en cinématiques du capot mobile 31 avec le panneau d'évitement 40.

Un mécanisme de ressort formant moyen d'emmagasinement d'énergie 50, comportant lui-même des degrés de liberté internes compatibles avec les liaisons décrites ci-avant permet de maintenir les contacts et les contraintes d'appui dans les liaisons du panneau d'évitement 40 avec le capot mobile 31. Ce ressort 50 s'étend sensiblement radialement et est disposé radialement sous le capot d'évitement 40 et sur une chape de support de la structure fixe formée par la poutre 11. Cette chape peut être une pièce rapportée sur la poutre 11.

À ce moyen d'emmagasinement d'énergie 50 peut se substituer d'autres moyens tels que des mécanismes de suspension à gaz, hydraulique, magnétique ou tout autre moyen adapté. Ce système peut être localisé à d'autres endroits sous le panneau d'évitement afin qu'il exerce un effort interne entre la structure fixe 11 et le panneau d'évitement 40.

Le capot d'évitement 40 est par ailleurs dimensionné longitudinalement de sorte à ce que la contrainte qu'elle assure contre le capot mobile 31 dans sa position ouverte ne soit pas relâchée durant la totalité de la course du capot mobile 31. En d'autres termes, quel que soit la position du capot mobile 31, le panneau d'évitement est contraint en appui contre le capot mobile et un effort entre la structure fixe et le panneau d'évitement est maintenu.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Inverseur de poussée (30) pour une nacelle (1) de moteur (6) d'aéronef, l'inverseur de poussée (30) comprenant un capot mobile (31) reculant d'une position fermée où la poussée n'est pas inversée à une position ouverte pour découvrir des grilles (32) inversant le sens du flux d'air froid qui est dévié de la veine (10) annulaire d'air secondaire, le capot mobile (31) comportant une partie radialement externe (33) destinée à venir à proximité d'un bord d'attaque d'une aile d'un aéronef, le capot mobile comportant sur la partie radialement externe (33) au moins un panneau d'évitement (40) destiné à éviter une interférence avec un bec mobile du bord d'attaque de l'aile de l'aéronef, où le panneau d'évitement (40) est monté en pivotement par rapport à une structure fixe de l'inverseur de poussée (30), l'inverseur de poussée (30) comprenant en outre au moins un moyen d'emmagasinement d'énergie (50) configuré de sorte que le panneau d'évitement est contraint en appui contre le capot mobile (31), au moins lorsque l'inverseur de poussée (30) est en position fermée, l'inverseur de poussée étant **caractérisé en ce que** le moyen d'emmagasinement d'énergie (50) est configuré de sorte que dans la position
ouverte, le panneau d'évitement (40) est contraint en contact et en appui contre le capot mobile (31) au niveau d'une zone d'appuis (46) localisée sur une surface extérieure du panneau d'évitement (40).

2. Inverseur de poussée (30) selon la revendication 1, **caractérisée en ce que** le panneau d'évitement (40) est fixe en translation par rapport à la structure fixe.

3. Inverseur de poussée (30) selon la revendication 1 ou 2, **caractérisée en ce que** le panneau d'évitement (40) est fixé à la structure fixe par une liaison pivot (41), assurée par des charnières alignées longitudinalement par rapport à l'inverseur de poussée (30).

4. Inverseur de poussée (30) selon l'une quelconque des revendications précédentes, **caractérisé en ce que** dans la position fermée, le panneau d'évitement (40) est contraint en contact et en appui contre le capot mobile (31) au niveau de zones d'appuis (45) localisées sur une périphérie dudit panneau d'évitement (40).

5. Inverseur de poussée (30) selon l'une quelconque des revendications précédentes, **caractérisé en ce que** les zones d'appuis (45, 46) présentent une bande de contact agencée pour garantir l'intégrité structurelle et aérodynamique du panneau d'évitement (40) et du capot mobile (31).

6. Inverseur de poussée (30) selon l'une quelconque des revendications précédentes, **caractérisé en ce que** le moyen d'emmagasinement d'énergie est un moyen de rappel élastique tel qu'un ressort.

7. Inverseur de poussée (30) selon l'une quelconque des revendications précédentes, **caractérisé en ce que** le moyen d'emmagasinement d'énergie (50) est disposé entre la structure fixe et le panneau d'évitement (40) de sorte à contraindre ledit panneau d'évitement (40 en appui contre le capot mobile (31).

8. Inverseur de poussée (30) selon l'une quelconque des revendications précédentes, **caractérisé en ce que** le panneau d'évitement (40) est contraint en appui contre le capot mobile (31), en position fermée et en position ouverte.

9. Nacelle (1) pour moteur (6) d'aéronef double flux comprenant une entrée d'air en amont du moteur, une section médiane destinée à entourer une soufflante du moteur, une section aval délimitant une veine annulaire adaptée pour faire circuler le flux d'air et abritant un inverseur de poussée, la nacelle étant **caractérisée en ce que** la section aval abrite un inverseur de poussée (30) selon l'une quelconque des revendications précédentes.

## Patentansprüche

1. Schubumkehr (30) für eine Gondel (1) eines Flugzeugtriebwerks (6), wobei die Schubumkehr (30) eine bewegliche Kappe (31) umfasst, die aus einer geschlossenen Position, in der der Schub nicht umgekehrt ist, in eine geöffnete Position zurückfährt, um die Gitter (32) aufzudecken, die die Richtung des Kaltluftstroms umkehren, der aus dem ringförmigen Sekundärluftkanal (10) umgelenkt wird, wobei die bewegliche Kappe (31) einen radial externen Teil (33) aufweist, der bestimmt ist, in die Nähe einer Vorderkante eines Flügels eines Flugzeugs zu kommen, wobei die bewegliche Kappe auf dem radial externen Teil (33) mindestens eine Vermeidungsplatte (40) aufweist, die bestimmt ist, eine Interferenz mit einer beweglichen Lamelle der Vorderkante des Flügels des Flugzeugs zu vermeiden, wobei
die Vermeidungsplatte (40) im Verhältnis zu einer festen Struktur der Schubumkehr (30) schwenkend angebracht ist, wobei die Schubumkehr (30) ferner mindestens ein Energiespeichermittel (50) umfasst, das derart ausgelegt ist, dass die Vermeidungsplatte in Abstützung gegen die bewegliche Kappe (31) mindestens dann beansprucht wird, wenn die Schubumkehr (30) in geschlossener Position ist, wobei die Schubumkehr **dadurch gekennzeichnet ist, dass** das Energiespeichermittel (50) derart ausgelegt ist, dass in der geöffneten Position die Vermeidungsplatte (40) in Kontakt und in Abstützung gegen die bewegliche Kappe (31) im Bereich einer Stützzone (46) beansprucht wird, die sich auf einer Außenfläche der Vermeidungsplatte (40) befindet.

2. Schubumkehr (30) nach Anspruch 1, **dadurch gekennzeichnet, dass** die Vermeidungsplatte (40) im Verhältnis zur festen Struktur translatorisch befestigt ist.

3. Schubumkehr (30) nach Anspruch 1 oder 2, **dadurch gekennzeichnet, dass** die Vermeidungsplatte (40) an der festen Struktur durch eine Drehzapfenverbindung (41) befestigt ist, die durch Scharniere sichergestellt ist, die längs im Verhältnis zur Schubumkehr (30) aufgereiht sind.

4. Schubumkehr (30) nach einem der vorangehenden Ansprüche, **dadurch gekennzeichnet, dass** in der geschlossenen Position die Vermeidungsplatte (40) in Kontakt und in Abstützung gegen die bewegliche Kappe (31) im Bereich der Stützzonen (45) beansprucht wird, die sich auf einer Peripherie der Vermeidungsplatte (40) befinden.

5. Schubumkehr (30) nach einem der vorangehenden Ansprüche, **dadurch gekennzeichnet, dass** die Stützzonen (45, 46) ein Kontaktband aufweisen, das eingerichtet ist, um die strukturelle und aerodynamische Integrität der Vermeidungsplatte (40) und der beweglichen Kappe (31) zu garantieren.

6. Schubumkehr (30) nach einem der vorangehenden Ansprüche, **dadurch gekennzeichnet, dass** das Energiespeichermittel ein elastisches Rückstellmittel wie eine Feder ist.

7. Schubumkehr (30) nach einem der vorangehenden Ansprüche, **dadurch gekennzeichnet, dass** das Energiespeichermittel (50) zwischen der festen Struktur und der Vermeidungsplatte (40) derart angeordnet ist, dass die Vermeidungsplatte (40) in Abstützung gegen die bewegliche Kappe (31) beansprucht wird.

8. Schubumkehr (30) nach einem der vorangehenden Ansprüche, **dadurch gekennzeichnet, dass** die Vermeidungsplatte (40) in geschlossener Position und in geöffneter Position in Abstützung gegen die bewegliche Kappe (31) beansprucht wird.

9. Gondel (1) für Flugzeug-Doppelstromtriebwerk (6), umfassend einen dem Triebwerk vorgelagerten Lufteinlass, einen mittleren Abschnitt, der bestimmt ist, ein Gebläse des Triebwerks zu umgeben, einen nachgelagerten Abschnitt, der einen ringförmigen Kanal begrenzt, der für die Zirkulation des Luftstroms geeignet ist und eine Schubumkehr beherbergt, wobei die Gondel **dadurch gekennzeichnet ist, dass** der nachgelagerte Abschnitt eine Schubumkehr (30) nach einem der vorangehenden Ansprüche beherbergt.

## Claims

1. A thrust reverser (30) for an aircraft engine (6) nacelle (1), the thrust reverser (30) comprising a movable cowl (31) moving back from a closed position where the thrust is not reversed to an open position for uncovering cascades (32) reversing the direction of the cold air flow which is deflected from the annular secondary air flow path (10), the movable cowl (31) including a radially outer portion (33) intended to come near to a leading edge of an aircraft wing, the movable cowl including on the radially outer portion (33) at least one avoidance panel (40) intended to avoid interference with a leading edge movable slat of the aircraft wing, where the avoidance panel (40) is pivotally mounted relative to a fixed structure of the thrust reverser (30), the thrust reverser (30) further comprising at least one energy storage means (50) configured so that the avoidance panel is constrained to bear against the movable cowl (31), at least when the thrust reverser (30) is in the closed position, the thrust reverser being **characterized in that** the energy storage means (50) is configured so that in the open position, the avoidance panel (40) is constrained to contact and to bear against the movable cowl (31) at a bearing area (46) located on an external surface of the avoidance panel (40).

2. The thrust reverser (30) according to claim 1, **characterized in that** the avoidance panel (40) is fixed in translation relative to the fixed structure.

3. The thrust reverser (30) according to claim 1 or 2, **characterized in that** the avoidance panel (40) is fixed to the fixed structure by a pivot connection (41), provided by hinges longitudinally aligned relative to the thrust reverser (30).

4. The thrust reverser (30) according to any one of the preceding claims, **characterized in that** in the closed position, the avoidance panel (40) is constrained to contact and to bear against the movable cowl (31) at bearing areas (45) located on a periphery of said avoidance panel (40).

5. The thrust reverser (30) according to any one of the preceding claims, **characterized in that** the bearing areas (45, 46) have a contact strip arranged to guarantee the structural and aerodynamic integrity of the avoidance panel (40) and the movable cowl (31).

6. The thrust reverser (30) according to any one of the preceding claims, **characterized in that** the energy storage means is an elastic return means such as a spring.

7. The thrust reverser (30) according to any one of the preceding claims, **characterized in that** the energy storage means (50) is disposed between the fixed structure and the avoidance panel (40) so as to constrain said avoidance panel (40) to bear against the movable cowl (31).

8. The thrust reverser (30) according to any one of the preceding claims, **characterized in that** the avoidance panel (40) is constrained to bear against the movable cowl (31), in the closed position and in the open position.

9. A nacelle (1) for a bypass aircraft engine (6) comprising an air inlet upstream of the engine, a median section intended to surround an engine fan, a downstream section delimiting an annular flow path adapted to circulate the air flow and accommodating a thrust reverser, the nacelle being **characterized in that** the downstream section accommodates a thrust reverser (30) according to any one of the preceding claims.
